# DEMANDE DE BREVET EUROPEEN

(11) **EP 3 490 213 A1**
(43) Date de publication de la demande: **29.05.2019**
(21) Numéro de dépôt: 17290153.0
(22) Date de dépôt: 22.11.2017
(51) Int. Cl.: H04L 29/06, H04W 12/06, H04W 12/12, H04W 4/80

(54) **SYSTÈME MÉCATRONIQUE DE CONTRÔLE DE MACHINE**

(71) Demandeur: Primetals Technologies France SAS, 42600 Savigneux (FR)
(72) Inventeur: Fontaine, Yvon, F-42600 Savigneux (FR)
(74) Mandataire: Metals@Linz

(57) **Abrégé**

La présente invention décrit un système mécatronique de contrôle de machine comprenant :
- au moins une machine (M, M'...) comprenant au moins une unité mécanique (M1, M2, M3...),
- un module d'automatisme (EA) couplé par une première liaison (Ll) à la machine pour un contrôle fonctionnel de l'unité mécanique,
caractérisé par
- une seconde liaison (L2) couplant le module d'automatisme et au moins un identifiant (I1, I2, I3...) de l'unité mécanique disposée dans la machine, la dite seconde liaison ayant au moins une transmission de données d'identification des identifiants, la transmission étant de type sécurisé ;
- un pilote de surveillance (PS) comprenant au moins une entrée de données (El) délivrées par le module d'automatisme et au moins une entrée de données (E2) d'identification délivrées par la seconde liaison.

## Description

La présente invention concerne un système mécatronique de contrôle de machine selon le préambule de la revendication 1.

A l'heure actuelle, des machines, par exemple dans une ligne de production de produits métalliques, sont contrôlées par des automatismes sous forme d'unités électronique et informatique et forment ainsi dans leur ensemble un système mécatronique.

A des fins de maintenance des machines et de leurs équipements mécaniques, des procédures de changement de pièces mécaniques spécifiques sont prévues sous des cycles bien définis par le constructeur de machine et l'utilisateur final. Ces procédures peuvent être complexes, car elles peuvent en particulier dépendre aussi des produits, de leurs divers formats, de leurs diverses propriétés. Il est donc majeur de respecter ces cycles tout en évitant une maintenance trop fréquente et en garantissant qu'une pièce mécanique a bien été remplacée à temps par une autre pièce mécanique adéquate en fonction des procédures opérationnelles de production et des produits traités.

En particulier, une erreur humaine sur un changement de pièce mécanique peut amener à de graves préjudices de fonctionnement de la machine, voire de danger sur des opérateurs proches de la machine. Egalement dans ce sens, il peut s'avérer que des pièces non conformes, car trop usagées, mal dimensionnées ou même contrefaites, soient malencontreusement disposées dans la machine, par exemple lors d'une procédure de maintenance de machine ou de changement de type de produit en entrée de la machine. Il est difficile à ce jour de prévoir qu'un système mécatronique possède un contrôle suffisant pour éviter ce type d'erreur en fonction des conditions opérationnelles réelles de la machine. Bien souvent, les opérateurs interviennent du mieux qu'ils le peuvent en contrôlant visuellement les pièces qu'ils doivent remplacer sous des cycles fournis par des grilles du constructeur de machine. En aucun cas, un opérateur ne peut être garant que la pièce changée est bien conforme par un simple contrôle visuel.

Afin d'aider les opérateurs à mieux identifier les pièces à changer, une méthode bien connue est de disposer un code-barre ou une étiquette électronique sur les pièces mécaniques à remplacer et celles qui les remplacent. Cette méthode d'identification des pièces est certes plus sécurisante, mais elle n'empêche pas qu'un opérateur fasse un mauvais choix des pièces de remplacement, voire que les pièces étiquetées ne soient pas conformes aux exigences du constructeur de machine pour un régime visé de production d'un produit. Ce cas de figure est particulièrement critique, dès qu'un fournisseur de pièces originales et'identifiées a été remplacé par un fournisseur de pièces analogues pouvant aussi avoir une étiquette d'identification, mais sous forme de copie non conforme voire frauduleuse.

Un but de la présente invention est de fournir un système mécatronique de contrôle accru de machine, en particulier pour garantir un fonctionnement conforme aux exigences opérationnelles de la machine et minimiser à ce titre toute erreur humaine d'un opérateur de la machine ou toute autre préjudice afférant à la machine.

Un tel système de contrôle accru est présenté au travers des caractéristiques de la revendication 1.

A partir d'un système mécatronique de contrôle de machine comprenant :
- au moins une machine comprenant au moins une unité mécanique,
- un module d'automatisme couplé par une première liaison à la machine pour un contrôle fonctionnel de l'unité-mécamique, l'invention propose que ce système mécatronique prévoit :
- une seconde liaison couplant le module d'automatisme et au moins un identifiant de l'unité mécanique disposée dans la machine, la dite seconde liaison ayant au moins une transmission de données d'identification des identifiants, la transmission étant de type sécurisé comme par cryptage ;
- un pilote de surveillance comprenant au moins une entrée de données délivrées par le module d'automatisme et au moins une entrée de données d'identification délivrées par la seconde liaison.

Le dit pilote de surveillance et ses deux entrées de données de type machine et identification permettent avantageusement de dresser un contrôle d'un état physique de la machine en fonction de l'état d'un ou des identifiants reconnus. Le contrôle est ainsi accru, car il est renforcé par un croisement sécurisé des différents types de données, en ce que par exemple, si un identifiant n'est pas détecté par le pilote, car une maintenance par remplacement de la pièce mécanique comportant l'identifiant est en cours, le pilote pourra recevoir la donnée de type machine sur l'état de maintenance détectée. En bref, il s'agira là d'un contrôle de non-présence d'identifiant toutefois finalement considéré en ordre.
Si, peu-après la maintenance et le remplacement de la pièce mécanique ayant un nouvel identifiant, le module d'automatisme envoie une donnée au pilote sur la fin de maintenance, par exemple selon une configuration de signaux de capteurs ou d'autres identifiants reconnus, mais que l'identifiant de la pièce remplacée n'est toujours pas reconnu comme correctement encodé, il est alors légitime de penser qu'une erreur de pièce mécanique ou de l'identifiant surgit. L'opérateur est alors informé et le module d'automatisme peut restreindre le mode de fonctionnement de la machine sous un mode dégradé sécurisé, afin d'éviter tout risque d'endommager la machine ou de péril sur les opérateurs aux abords de la machine. Si outre une seconde intervention de maintenance, ce problème devait à nouveau surgir, alors que l'opérateur semble avoir remplacé la pièce mécanique par une autre lui semblant appropriée, le pilote de contrôle réitérant sa surveillance émettra au module d'automatisme une instruction à l'opérateur de contacter le fournisseur de machine pour un contrôle approfondi.

De la sorte, il en découle d'autres avantages considérables :
- une détection systématique de pièces ou unités mécaniques malencontreusement non-conformes, voire contrefaites à l'insu de l'opérateur et du fournisseur de machine ;
- une détection plus informative et sécurisée sur l'état et la durée de vie de chacune des pièces mécaniques en fonction de leurs divers modes d'utilisation ou des produits traités par la machine ;
- une émission d'alertes à l'opérateur lui signalant un potentiel vice de procédure avant de lancer un mode de fonctionnement de la machiné
- un mise sous un mode dégradé de machine, de sorte que tout risque d'endommagement de machine ou du produit, voire de risque humain, n'ait lieu.

Un ensemble de sous-revendications présente également des avantages de l'invention, en particulier liés aux avantages précités.

Un exemple de réalisation et d'application est fourni à l'aide de la figure décrite :

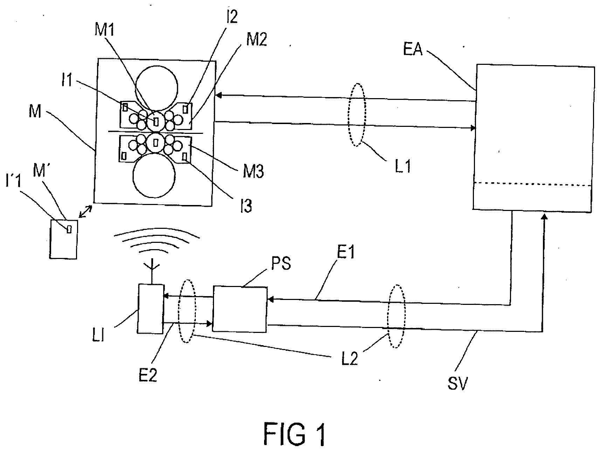

- Figure.1: Système mécatronique de contrôle selon l'invention.

Figure 1 présente un système mécatronique de contrôle selon l'invention comprenant :
- au moins une machine (M, M'...) comprenant au moins une unité mécanique (M1, M2, M3...),
- un module d'automatisme (EA) couplé par une première liaison (L1) à la machine pour un contrôle fonctionnel de l'unité mécanique,
- une seconde liaison (L2) couplant le module d'automatise et au moins un identifiant (I1, I2, I3...) de l'unité mécanique disposée dans la machine, la dite seconde liaison ayant au moins une transmission de données d'identification des identifiants, la transmission étant de type sécurisé ;
- un pilote de surveillance (PS) comprenant au moins une entrée de données (E1) délivrées par le module d'automatisme et au moins une entrée de données (E2) d'identification délivrées par la seconde liaison.

La machine (M) est ici, par exemple, une cage de laminoir d'une bande métallique comprenant des cylindres de travail (M1), des blocs de maintien de cylindres de support latéral (M2, M3), etc. De telles machines requièrent de fréquentes phases de maintenance, en ce que les cylindres de travail sont le plus souvent changés après avoir laminé une ou plusieurs bobines de bande métallique, puis les blocs de cylindres de support latéral le sont un peu moins souvent. Si une non-conformité du choix des cylindres ou des supports à changer devait survenir, un opérateur peut donc provoquer un dégât de machine et donc de production,. Ici, des identifiants (I1, I2, I3...) sont ainsi disposés sur les cylindres de travail et les blocs de maintien, tous étant voués à être changer selon leurs propres cycles de maintenance. Une seconde machine (M') est aussi ici représentée, étant couplée par une première liaison de type (L1) avec le module d'automatisme (liaison non représentée). Cette seconde machine peut être un outil de maintenance, un système de capteur(s), une machine ou un élément mécanique couplable à la première machine (M), etc. Sur cette seconde machine coopérant avec la première machine peut être aussi disposé un identifiant (I'1) qui selon son état de détection indiquera au pilote de surveillance sa présence de manière sécurisée. Dans tous les cas, le pilote recevra également des données sur l'état physique de la seconde machine qui renforceront les informations des données sur l'état physique de la première machine. A ce titre, si la première machine est en phase supposée de maintenance (= ses identifiants pouvant donc être détectés comme non présents), la seconde machine telle qu'un outil de changement de cylindres accolé ou distant de la première machine donnera l'état réel de l'avancement de la maintenance. Le contrôle du pilote de surveillance est donc avantageusement plus robuste si un état physique de la première machine devait apporter un doute de surveillance.

Avantageusement, les ou l'identifiant est une étiquette électronique, telle qu'une puce RFID (Radio Frequency Identification). Celle-ci peut être lue par un lecteur d'identifiant (LI) par liaison radio-fréquence, le dit lecteur étant disposé dans le voisinage du ou des identifiants à détecter. Ainsi, si l'unité mécanique portant une étiquette de type RFID est en mouvement dans la machine ou bien déplacée hors de la machine, la liaison avec le lecteur d'identifiant est toujours possible à portée proche, sinon impossible à portée lointaine (cas d'une maintenance lors d'un retrait ou remplacement de l'unité mécanique et de son identifiant).

La seconde liaison (L2) comprend au moins une transmission cryptée de données, au moins une clé dudit cryptage étant idéalement générée par le module d'automatisme ou/et par le pilote de surveillance. Il est ainsi impossible pour un fournisseur de pièces non conformes, de délivrer des données du lecteur d'identifiant et du module d'automatisme au pilote de surveillance. Egalement, de manière analogue, le pilote de surveillance peut aussi coder et décoder par une ou plusieurs clés des sorties de données vers le module d'automatisme et le lecteur d'identifiant.

Un mode de réalisation du système selon l'invention prévoit ainsi que la seconde liaison peut comprendre en série :
- le lecteur d'identifiant (LI) ;
- le pilote de surveillance ;
- le dit lecteur d'identifiant intégrant le dit pilote de surveillance ou ayant au moins une entrée et une sortie couplées et sécurisées au dit pilote de surveillance, le dit couplage étant par exemple réalisé sous respect d'une adresse IP et d'une adresse MAC de sorte que le couplage permette un protocole de communication très sécurisé ;
- ou le pilote de surveillance étant part du module d'automatisme et le lecteur d'identifiant étant couplé au module d'automatisme par exemple par voie filaire ou aérienne et toujours de manière cryptée,
- ou le pilote de surveillance étant relié à au moins une entrée et au moins une sortie du module d'automatisme au moyen d'une transmission sécurisée, telle que par encryptage de données.

Le système selon l'invention prévoit que la seconde liaison comprend une liaison à transmission de données liées à un état physique de la machine, en particulier de l'état physique de l'unité mécanique, en fonction de son contrôle depuis le module de l'automatisme, les dites données étant transmises du module d'automatisme vers le pilote de surveillance pour un contrôle accru de' machine par rapport à un simple contrôle via les seuls identifiants.

A ce titre, l'état physique de la machine peut comprendre au moins un des paramètres informatifs suivants : indice de présence de l'identifiant, indice de localisation de l'unité mécanique dans ou hors de la machine, durée d'utilisation de l'unité mécanique, température de l'unité mécanique, indice de dysfonctionnement de l'unité mécanique, indice de changement de l'unité mécanique, indice d'étape de fonctionnement de l'unité de mécanique ou de la machine ; indice d'état physique d'autres unités mécaniques de la machine.

Ainsi, si une unité mécanique est usagée et donc retirée de la machine pour être remplacée, et même si l'identifiant de l'unité mécanique a été retiré pour être replacé sur une autre unité mécanique (non-conforme), le pilote de surveillance pourra avantageusement constater une présence trop longue de l'identifiant (par données de présence fournies par le lecteur d'identifiant) au cours de plusieurs cycles de maintenance de machine (par données de machine fournies par le module d'automatisme) qui signalera donc que la durée d'utilisation de l'unité mécanique est largement dépassée. Une alerte sera donc émise pour informer l'opérateur qu'un danger est possible si réellement l'unité mécanique n'a pas été contrôlée ou changée par une autre unité mécanique conforme. Au cours de cette alerte, le pilote de surveillance ou/et le module d'automatisme fourniront des commandes de machine pour la protéger, par exemple sous un mode dégradé de fonctionnement, voire un mode d'arrêt.

Par ailleurs, il est aussi possible pour un fabricant de machine de prévoir la dite seconde liaison sous une transmission de type codée ou cryptée dynamiquement par au moins une clé privée modifiable sur la durée en fonction de chacun des nombreux identifiants enregistrés pour un type d'unité mécanique à maintenance régulière, de sorte qu'un tiers tel qu'un fournisseur de pièces non-conformes ne puisse pas sur le long terme réutiliser frauduleusement de mêmes étiquettes RFID certifiées originales sur les diverses unités mécaniques à remplacer, sans que le pilote de surveillance (ou le module d'automatisme) ne le détecte.

Le système selon l'invention peut bien entendu comprendre une pluralité d'unités mécaniques couplées respectivement à un des identifiants, de sorte qu'un état physique global de la pluralité des unités mécaniques est validé comme fonctionnellement cohérent par un schéma permis ou interdit défini par chacun des états physiques des unités mécaniques. Ces unités mécaniques sont généralement disposées dans la machine en tant que composantes internes, toutefois il est possible que des unités mécaniques externes d'une seconde machine interagissant avec la machine initiale soient aussi couplées à des identifiants contribuant à mieux définir un état physique global de la machine initiale. A titre d'exemple, dans le cas d'une cage de laminoir comme machine initiale, des unités mécaniques externes peuvent être comprises dans une seconde machine de changement de cylindres disposée à l'écart ou proche de la cage de laminoir en fonction d'une phase fonctionnelle et respectivement d'une phase de maintenance de la cage laminoir. En fonction d'un schéma de détection (ou non) des identifiants liés à la seconde machine, il est ainsi possible de savoir si la machine initiale est en phase de maintenance ou non. Toutes ces phases fonctionnelles et de maintenance peuvent aussi être avantageusement enregistrées pour un meilleur suivi de maintenance en cas de doute ou d'une défaillance ultérieure.

Le pilote de surveillance émet un signal de validation (SV) vers l'automatisme en fonction d'une détection et reconnaissance approuvée de chaque identifiant selon un état de machine lié à l'entrée de données (E1) délivrées par le module d'automatisme. Ce signal de validation dépend de la bonne conformité des schémas permis ou interdits des identifiants en fonction des états de la machine à un instant donné ou sur une durée de plusieurs cycles de maintenance. En d'autres termes, le pilote de surveillance est doté d'un algorithme interne pouvant faire des corrélations et autres tests calculatoires ou logiques entre les données reçues par le lecteur d'identifiants et le module d'automatisme. Pour ce faire, le pilote de surveillance est préférablement réalisé sous forme d'une plateforme électronique et/ou informatique sécurisée, tel que par un moyen d'encryptage ou de compilation.

Le pilote de surveillance peut également être disposé sous une des configurations suivantes :
- il est disposé sous forme monobloc ou bi-bloc avec le lecteur d'identifiant (LI) ;
- il est disposé dans un composant de type logique distinct et couplé de manière sécurisée au module d'automatisme ;
- il est disposé dans le module d'automatisme ;
- il est disposé partiellement dans le composant de type logique et le module d'automatisme.

De ce fait, l'insertion du pilote de surveillance est très flexible en fonction des possibilités de l'ajouter (avec le lecteur d'identifiant) sur une machine existante ayant un module d'automatisme, le dit module d'automatisme pouvant aussi être reconfigurable (par exemple par voie de reprogrammation ou extension électronique/automatique) ou non si le pilote de surveillance est prévu distinct du module d'automatisme.

Outre le fait que le pilote de surveillance soit disposé ou non dans le module d'automatisme, il comprend :
- un sous-module d'analyse recevant des données (E1, E2) fournies par la seconde liaison, c'est-à-dire des données fournies par le lecteur d'identifiant et des données fournies par le module d'automatisme,
- un sous-module de traitement de données régi par des critères de surveillance sur la base de schéma permis ou interdit d'état des identifiants en fonction d'état de machine,
- un sous-module de commande qui, en fonction du signal de validation (SV) en sortie du sous-module de traitement de données, impose au module d'automatisme des modes sélectifs de fonctionnement à la machine, tels qu'entre autres, un mode de bon fonctionnement, un mode d'alerte, un mode de maintenance, un mode dégradé ou ralenti, un mode d'arrêt.

A titre d'exemple, si la machine est du type « cage de laminoir », le pilote de surveillance peut présenter plusieurs mode de commande suivant les différents cas possibles ci-dessous:
- si le pilote de surveillance reçoit du lecteur d'identifiant un signal de présence intégrale conforme de tous les identifiants requis et reçoit un signal de fonctionnement du module d'automatisme indiquant des conditions opérationnelles de laminage actif (= machine en mode actif de fontionnement), le signal de validation (SV) impose (ou confirme) un mode de bon fonctionnement au module d'automatisme ;
- si le pilote de surveillance ne reçoit du lecteur d'identifiant aucun des signaux requis de présence des identifiants de la cage de laminoir et reçoit un signal de fonctionnement du module d'automatisme indiquant des conditions de maintenance de la cage de laminoir (= machine en phase de maintenance), le signal de validation (SV) impose (ou confirme) un mode de bon fonctionnement au module d'automatisme ;
- si le pilote de surveillance reçoit du lecteur d'identifiant des signaux de présence des mêmes identifiants de la cage de laminoir et reçoit un nombre excessif de signaux de cycles successifs de fonctionnement du module d'automatisme indiquant des conditions.de maintenance de la cage de laminoir (= machine en phase de maintenance), le signal de validation (SV) impose (ou confirme) un mode dégradé ou un mode d'arrêt au module d'automatisme, sachant que soit des unités mécaniques n'ont pas été maintenues (remplacées) à temps ou soit des identifiants ont pu être détachés des unités mécaniques originelles puis re-disposés sur des unités mécaniques de remplacement, ces dernières pouvant être non-conformes voire contrefaites :
- si le pilote de surveillance ne reçoit du lecteur d'identifiant qu'une partie des signaux requis de présence de tous-les identifiants de la cage de laminoir et reçoit un signal de fonctionnement du module d'automatisme indiquant des conditions de fonctionnement ou de maintenance de la cage de laminoir (= machine), le signal de validation (SV) impose (ou confirme) un mode dégradé ou un mode d'arrêt au module d'automatisme, sachant que soit des unités mécaniques de remplacement sans identifiant ont été utilisées, ces dernières pouvant être non-conformes voire contrefaites ou que ces unités mécaniques ne comprennent pas d'identifiant respectant un codage ou un cryptage imposé au moyen de la seconde liaison (L2).

Dans tous les cas précédemment décrits, le pilote de surveillance peut ainsi générer des alertes périodiques et donc des alertes avantageusement préventives à un opérateur, au fabricant ou au service de maintenance de la machine, afin de permettre un contrôle accru de fonctionnement de machine, en particulier pour éviter des non-conformités, des erreurs humaines ou de potentiels actes de contrefaçon d'un fournisseur d'unités mécaniques. Ces alertes peuvent être émises sous forme de protocole chronologique en fonction des cycles de fonctionnement et de maintenance de la machine, afin d'obtenir un contrôle rétroactif chronologique en cas de défaillance technique.

## Revendications

1. Système mécatronique de contrôle de machine comprenant :
- au moins une machine (M, M'...) comprenant au moins une unité mécanique (M1, M2, M3...),
- un module d'automatisme (EA) couplé par une première liaison (L1) à la machine pour un contrôle fonctionnel de l'unité mécanique,
**caractérisé par**
- une seconde liaison (L2) couplant le module d'automatisme et au moins un identifiant (I1, I2, I3...) de l'unité mécanique disposée dans la machine, la dite seconde liaison ayant au moins une transmission de données d'identification des identifiants, la transmission étant de type sécurisé ;
- un pilote de surveillance (PS) comprenant au moins une entrée de données (E1) délivrées par le module d'automatisme et au moins une entrée de données (E2) d'identification délivrées par la seconde liaison.

2. Système selon revendication 1, pour lequel l'identifiant est une étiquette électronique, telle qu'une puce RFID.

3. Système selon une des revendications 1 à 2, pour lequel la seconde liaison comprend au moins une transmission cryptée de données, au moins une clé dudit cryptage. étant idéalement générée par le module d'automatisme ou/et par le pilote de surveillance.

4. Système selon une des revendications 1 à 3, pour lequel la seconde liaison comprend en série :
- un lecteur d'identifiant (LI) ;
- le pilote de surveillance ;
- le dit lecteur d'identifiant intégrant le dit pilote de surveillance ou ayant au moins une entrée et une sortie couplées de manière sécurisées au dit pilote de surveillance, le dit couplage étant idéalement réalisé sous respect d'une adresse IP et d'une adresse MAC ;
- ou le pilote de surveillance étant part de l'automatisme ou relié à au moins une entrée et au moins une sortie du module d'automatisme au moyen d'une transmission sécurisée, telle que par encryptage de données.

5. Système selon une des revendications 1 à 4, pour lequel la seconde liaison comprend une liaison à transmission de données liées à un état physique de la machine, en particulier de l'unité mécanique, en fonction de son contrôle depuis le module de l'automatisme, les dites données étant transmises du module d'automatisme vers le pilote de surveillance.

6. Système selon revendication 5, pour lequel l'état physique comprend au moins un des paramètres suivants : indice de présence de l'identifiant, indice de localisation de l'unité mécanique dans ou hors de la machine, durée d'utilisation de l'unité mécanique, température de l'unité mécanique, indice de dysfonctionnement de l'unité mécanique, indice de changement de l'unité mécanique, indice d'étape de fonctionnement de l'unité de mécanique ou de la machine ; indice d'état physique d'autres unités mécaniques de la machine.

7. Système selon revendication 6, pour lequel, dans le cas d'une pluralité d'unités mécaniques couplées respectivement à un des identifiants, un état physique global de la pluralité des unités mécaniques est validé comme fonctionnellement cohérent par un schéma permis ou interdit défini par chacun des états physiques des unités mécaniques.

8. Système selon une des revendication 1 à 7, pour lequel le pilote de surveillance émet un signal de validation (SV) vers l'automatisme en fonction d'une détection et reconnaissance approuvée de chaque identifiant selon un état de machine lié à l'entrée de données (E1) délivrées par le module d'automatisme.

9. Système selon une des revendications 1 à 8, pour lequel le pilote de surveillance est une plateforme électronique et/ou informatique sécurisée, tel que par un moyen d'encryptage ou de compilation.

10. Système selon revendication 1 à 9, pour lequel le pilote de surveillance est disposé sous une des configurations suivantes :
- il est disposé sous forme monobloc ou bi-bloc avec le lecteur d'identifiant (LI) ;
- il est disposé dans un composant de type logique distinct et couplé de manière sécurisée au module d'automatisme ;
- il est disposé dans le module d'automatisme ;
- il est disposé partiellement dans le composant de type logique et le module d'automatisme.

11. Système selon une des revendications 1 à 10, pour lequel le pilote de surveillance comprend :
- un sous-module d'analyse recevant des données (E1, E2) fournies par la seconde liaison, c'est-à-dire des données fournies par le lecteur d'identifiant et des données fournies par le module d'automatisme,
- un sous-module de traitement de données régi par des critères de surveillance sur la base de schéma permis ou interdit d'état des identifiants en fonction d'état de machine,
- un sous-module de commande qui, en fonction du signal de validation (SV) en sortie du sous-module de traitement de données, impose au module d'automatisme des modes sélectifs de fonctionnement à la machine, tels qu'entre autres, un mode de bon fonctionnement, un mode d'alerte, un mode de maintenance, un mode dégradé ou ralenti, un mode d'arrêt.

12. Système selon une des revendications 1 à 11, pour lequel le pilote de surveillance génère des alertes préventives à un opérateur, au fabricant ou au service de maintenance de la machine, les dites alertes pouvant être émises sous forme de protocole chronologique en fonction des cycles de fonctionnement et de maintenance de la machine.
